Europäisches Patentamt

European Patent Office

Office européen des brevets

(11) Numéro de publication: **0 184 109**
**B1**

(12) **FASCICULE DE BREVET EUROPEEN**

(45) Date de publication du fascicule du brevet: **18.07.90**

(21) Numéro de dépôt: **85114950.0**

(22) Date de dépôt: **26.11.85**

(51) Int. Cl.⁵: **H 04 B 10/00,** H 04 L 25/49,
H 04 B 17/02, G 08 C 19/28

(54) Procédé et dispositif de télésignalisation pour une liaison de transmission numérique.

(30) Priorité: **30.11.84 FR 8418318**

(43) Date de publication de la demande:
**11.06.86 Bulletin 86/24**

(45) Mention de la délivrance du brevet:
**18.07.90 Bulletin 90/29**

(84) Etats contractants désignés:
**BE DE FR GB IT LU NL SE**

(56) Documents cités:
**EP-A-0 090 728**
**EP-A-0 091 619**
**GB-A-2 131 657**

**PROCEEDINGS OF THE IEEE, vol. 68, no. 10, octobre 1980, pages 1299-1303, IEEE New York, US; C.D. ANDERSON et al.: "An undersea communication system using fiberguide cables"**

(73) Titulaire: **ALCATEL CIT**
**12 Rue de la Baume**
**F-75008 Paris (FR)**

(72) Inventeur: **Lacroix, Jean Claude**
**11, Allée de la Vigne Dieu**
**F-91680 Bruyeres Le Chatel (FR)**
Inventeur: **Franco, Pierre**
**9, rue du Professeur Fleming**
**F-94260 Fresnes (FR)**
Inventeur: **Le Gall, Stéphane**
**c/o Alcatel BP-Nozay**
**F-91620 La Ville du Bois (FR)**
Inventeur: **Bourret, Gérard**
**1 et 3, Chemin de la Fosse aux Moines**
**F-91620 La Ville du Bois (FR)**
Inventeur: **Pochet, Jacques**
**18, rue des Glycines Le Plessis Pate**
**F-91220 Bretigny sur Orge (FR)**

(74) Mandataire: **Weinmiller, Jürgen et al**
**Lennéstrasse 9 Postfach 24**
**D-8133 Feldafing (DE)**

**Description**

La présente invention est relative à la télésurveillance d'équipements répartis le long d'une liaison de transmission numérique.

Pour répondre aux exigences de durée de vie de fiabilité imposées aux liaisons de transmission à très longue portée, il est apparu nécessaire de prévoir, dans le cadre des systèmes à fibres optiques, une certaine redondance au niveau des diodes laser équipant les répéteurs. Cette redondance obtenue en équipant dès l'origine chaque répéteur avec plusieurs diodes laser de rechange mise en service une à une par un circuit de commutation implique l'existence d'une télécommande des circuits de commutation des répéteurs depuis équipements terminaux de la ligne et d'une télésignalisation depuis chaque répéteur renseignant les équipements terminaux sur l'état des diodes laser en service.

On connaît, par le document US—A—4 281 416 une liaison numérique par fibre optique équipée d'une télécommande permettant de remplacer dans chaque répéteur la diode laser en service par une diode laser de réserve et d'une télésignalisation propre à chaque répéteur permettant de transmettre une alarme dès le franchissement d'un seuil par le courant de polarisation de la diode laser en service. Le signal de télécommande est constitué d'un message numérique qui est de même nature que le signal numérique transmis par la liaison et qui est inséré au milieu du trafic par le terminal télésurveillant. Ce message numérique répété plusieurs fois consécutivement pour éviter les fausses manoeuvres est formé d'une partie identifiant le répéteur concerné et d'une partie identifiant dans le répéteur concerné la diode laser à mettre en service. Le signal de télésignalisation est un motif de même nature que le signal numérique transmis, qui remplace le trafic, et qui est formé d'une suite binaire pseudo-aléatoire dont la valeur initiale identifie le répéteur source.

Cette télésignalisation présente l'inconvénient de nécessiter dans chaque répéteur une source de suites pseudo-aléatoires fonctionnant au débit du signal numérique, c'est-à-dire, dans le cadre d'une transmission numérique par fibre optique, à un très grand débit uniquement réalisable en technologie ECL grande consommatrice, d'énergie. Cela augmente de façon significative la consommation d'un répéteur et surtout sa dissipation thermique.

Elle a également l'inconvénient d'interrompre la liaison sur une durée suffisante pour provoquer une perte de synchronisation de la hiérarchie du train numérique et par conséquent de n'être adaptée qu'à la transmission d'alarmes majeures.

La présente invention a pour but d'éviter ces inconvénients et d'obtenir une télésignalisation à message momentanément substitué au train numérique acheminé par la liaison qui nécessite un minimum de circuits très rapides au niveau des circuits élaborant le message et qui ne perturbe pas le train numérique ou son traitement en dehors des instants d'émission du message.

Elle a pour objet un procédé de télésignalisation à partir d'équipements répartis le long d'une liaison de transmission numérique consistant à transmettre la signalisation le long de la liaison à l'aide d'un message numérique de même débit que le train numérique de données acheminé par la liaison auquel il est momentanément substitué, ce message numérique étant formé au plus de n séquences identiques de N éléments binaires (n et N étant des entiers supérieurs à un), la première séquence étant toujours présente et les n−1 autres traduisant par leur présence ou leur absence au cours de leur intervalle de temps respectif les valeurs 0 ou 1 des n−1 chiffres d'un nombre binaire codant une information de télésignalisation, la période de répétition desdits intervalles de temps étant égale à T, et la durée desdites séquences étant elle-même inférieure à T.

La configuration des séquences utilisée pour le codage des informations de télésignalisation, identité de l'émetteur, nature de l'alarme, peut être choisie de manière unique avec le seul soucis de satisfaire au mieux critères de non imitation par le train numérique de données et de faciliter l'élaboration à partir du signal de rythme récupéré du train numérique toujours présent dans un équipement intermédiaire d'une liaison de transmission numérique.

Pour la non imitation par le train numérique, on profite de la relative rareté des messages de télésignalisation pour donner aux séquences une configuration interdite par le code redondant utilisé en ligne notamment pour permettre la surveillance des erreurs obtenue à l'aide d'un motif élaboré à partir d'une combinaison logique simple des premières sous-harmoniques du rythme récupéré du train numérique qui ne mette en jeu qu'un nombre faible de circuits logiques travaillant à grande vitesse.

La composition du message numérique à partir des séquences se fait à une vitesse moindre que celle du train numérique, accessible par une technologie plus économe en énergie du type $I^2 L$ ou Schottky.

La présente invention a également pour objet un dispositif de mise en oeuvre du procédé précité.

D'autres caractéristiques et avantages de l'invention ressortiront de la description ci-après d'un mode de réalisation donné à titre d'exemple. Cette description sera faite en regard du dessin dans lequel:

— la figure 1 représente schématiquement l'implantation de circuits d'émission de messages de télésignalisation dans un répéteur bidirectionnel d'une liaison de transmission numérique à fibres optiques et

— les figures 2 et 3 représentent respectivement des schémas électriques de circuits d'émission et de réception des messages de télésignalisation conformes à l'invention.

La télésignalisation qui va être décrite s'applique à une liaison de transmission numérique à 344 Mbits/s par fibres optiques utilisant en ligne un code 5B/6B et regroupant, par un multiplexage organisé en trames de 7τs subdivisées en sept secteurs, deux trains numériques à 140 Mbits/s résultant d'un multiplexage numérique de quatrième ordre selon une hiérarchie conforme aux avis de la série G700 du CCITT. Prévue pour desservir au plus 256 équipements répartis sur la liaison et signaler deux types d'anomalies par équipement réparti, elle emploie un message qui peut prendre 512 valeurs possibles et est constitué au plus de dix séquences identiques non consécutives se succédant sur dix intervalles de temps égaux et consécutifs. La première séquence, toujours présente, sert de préfixe signalant l'apparition d'un message de télésignalisation tandis que les neuf autres traduisent par leur présence ou leur absence dans leur intervalle de temps respectif la valeur binaire 0 ou 1 des neuf chiffres d'un nombre binaire codant les 512 valeurs possibles.

La configuration de chaque séquence doit être reconnaissable dans le train numérique en ligne même en présence d'un taux d'erreur élevé, facile à élaborer, ne pas perturber les dispositifs de récupération de rythme du train numérique répartis dans les différents équipements de la liaison et ne pas compromettre la synchronisation ultérieure de la hiérarchie du train numérique. On parvient à ces fins, en formant chaque séquence à partir d'une répétition du motif binaire, à $q=4$ éléments binaires, 1000 au débit de 344 Mbits/s en synchronisme avec le rythme du train numérique. En effet ce motif se substitue momentanément au train numérique de données codé en 5B/6B en provoquant un maximum de six absences d'impulsions successives ce qui est amplement tolérable par les dispositifs de récupération de rythme, est inimitable par le train numérique de données au bout de quatre répétitions même en admettant une erreur sur un groupe quelconque de seize éléments binaires consécutifs de ce train, et peut être facilement élaboré à partir d'une opération logique de type "non ou" réalisée entre deux signaux rectangulaires d'horloge l'un à la moitié et l'autre au quart du rythme du train numérique.

Une séquence doit être reconnaissable dans le train numérique en ligne en présence d'un taux d'erreur élevé, par exemple $10^{-2}$. En admettant une erreur dans la séquence et en tenant compte de l'imitation possible par le train numérique de données d'une répétition de trois motifs mais non de quatre, elle est déjà reconnaissable avec une répétition de huit motifs c'est-à-dire avec une durée de l'ordre de 93 ns. Plus elle est longue, plus cela permet de diminuer la vitesse des circuits assurant la composition du message de télésurveillance. Elle ne doit cependant pas perturber la synchronisation de la hiérarchie du train numérique et pour cela être nettement inférieure à la durée d'un secteur de la trame de la hiérarchie la plus élevée du train à 344 Mbits/s. Une valeur de 350 ns correspondant à 30 répétitions du motif est un bon compromis.

La durée des intervalles de temps consécutifs au début desquels les séquences peuvent être insérées dans le train numérique est choisie de manière que les insertions de deux séquences consécutives ne perturbent pas au même endroit deux secteurs consécutifs de la trame d'un ordre quelconque du multiplex cela, de manière à éviter la perte de plusieurs mots de verrouillage trame successifs ou de plus d'un bit d'indication de justification dans un trame. Elle est ici choisie égale à la durée de 3072 bits du train numérique, soit sensiblement 8,93 μs, ce qui donne au message de télésignalisation une durée totale sensiblement de 80,72 μs.

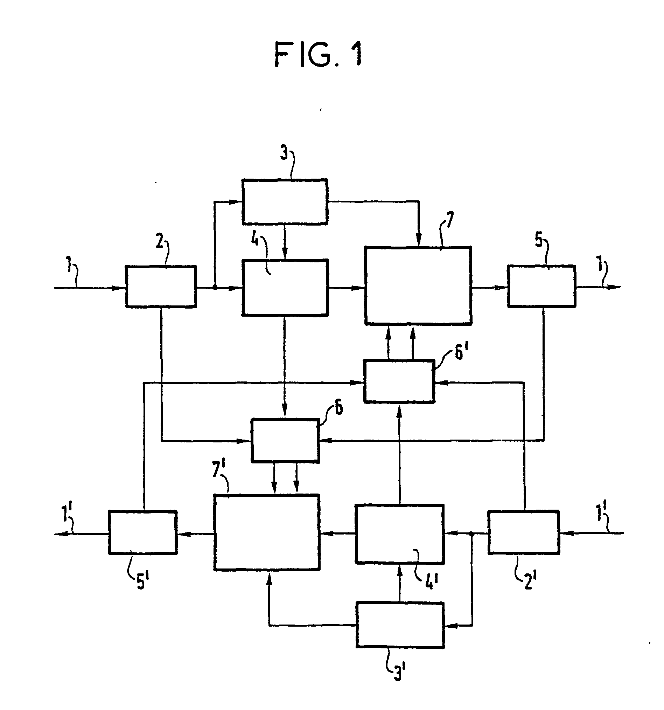

La figure 1 représente schématiquement un répéteur bidirectionnel de la liaison équipé pour chaque voie d'un circuit d'émission de télésignalisation contrôlé par un circuit de détection et de gestion des alarmes surveillant l'autre voie.

L'une des voies régénère les signaux optiques empruntant une fibre optique 1 dans un sens et l'autre les signaux optiques empruntant une fibre optique 1' dans l'autre sens. Chacune d'elles comporte de manière classique un démodulateur opto-électrique 2, 2' recevant le signal optique à régénérer de la fibre optique 1, 1', des circuits électroniques de remise en forme du signal constitués essentiellement par un circuit de récupération de cadence bit 3, 3' et d'un circuit de régénération 4, 4', un modulateur optique 5, 5' qui reçoit le signal régénéré et le réintroduit dans la fibre optique 1, 1'. Elles sont en outre dotées d'un circuit de détection et de gestion des alarmes 6, 6' surveillant le bon fonctionnement des éléments précités et capable d'émettre deux types d'alarme, et d'un circuit d'emission de télésignalisation 7, 7' intercalé entre le circuit de régénération 4, 4' et le modulateur optique 5, 5' et contrôlé à la fois par leur propre circuit de récupération de cadence bit 3, 3' et par le circuit de détection et de gestion des alarmes 6', 6 de l'autre voie.

En cas d'anomalie sur l'une des voies, le circuit de détection et de gestion des alarmes 6, 6' déclenche l'émission d'une télésignalisation sur l'autre voie en direction du terminal situé en amont par rapport à la voie victime de l'anomalie qui peut alors prendre les mesures nécessaires pour y remédier soit par détournement du trafic, soit par télécommande d'une modification de structure par exemple échange de la diode laser en fonctionnement.

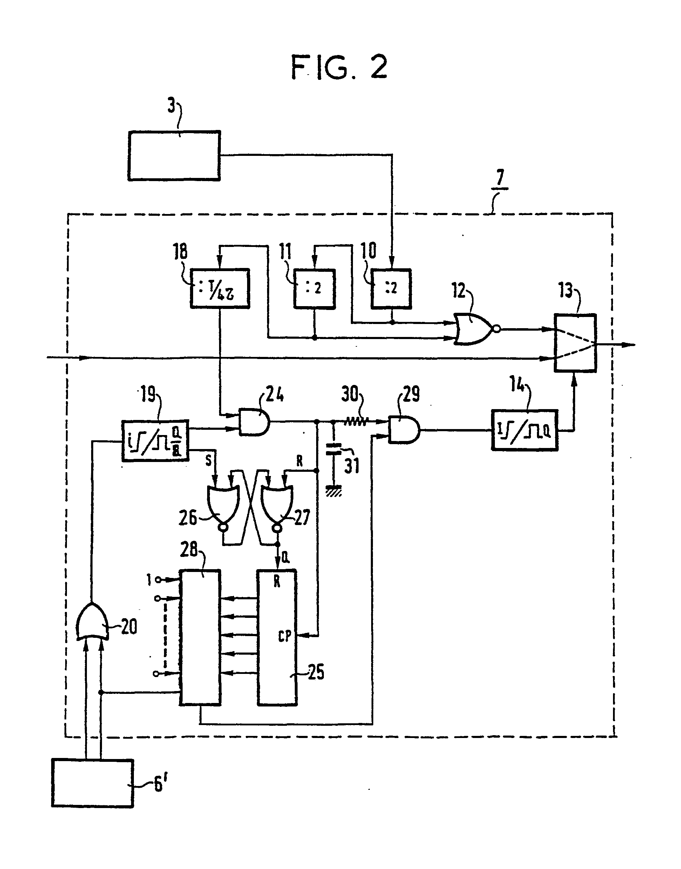

La figure 2 illustre un exemple de réalisation de l'une des circuits d'émission de télésignalisation. Celui-ci, 7, comporte:

— un générateur de motifs répétififs 1000 formé de deux circuits diviseur par deux 10, 11 connectés en cascade à la sortie du circuit de récupération de cadence bit 3 et d'une porte logique 12 de type "non ou" à deux entrées connectées en entrée et sortie du dernier diviseur par deux 11,

— un aiguillage formé d'un multiplexeur à deux entrées 13 connecté par une entrée à la sortie de la porte logique 12 de type "non ou" du générateur de motifs et intercalé par son autre entrée et sa sortie entre le circuit de régénération du train numérique (4 figure 1) et le modulateur optique (5 figure 1),

— un premier monostable 14 déclenchable par front montant sur une durée t correspondant à celle d'une séquence, qui commande l'adressage du multiplexeur à deux entrées 13 de manière à aiguiller vers le modulateur optique le signal du circuit de régénération du train numérique lorsqu'il est au repos et le signal du générateur de motifs lorsqu'il est déclenché,

— un générateur du rythme 1/T de succession des séquences opérant par division dans le rapport T/τ (3×2¹⁰), τ étant la période bit du train numérique, de la fréquence du signal de sortie du circuit de récupération de cadence bit 3 et formé d'un diviseur 18 par 3×2⁸ connecté en sortie du diviseur 11,

— un deuxième circuit monostable 19 déclenchable par front montant sur une durée D correspondant à celle d'un message de télésignalisation, déclenché par le circuit de détection et de gestion des alarmes 6' par l'intermédiaire d'une porte logique de type "ou" 20 reliée par ses deux entrées aux sorties d'alarmes de ce dernier circuit,

— une première porte logique de type "et" 24 contrôlée par la sortie Q un deuxième circuit monostable 19 transmettant le signal du diviseur 18 constituant le rythme de succession des séquences pendant toute la durée d'un message de télésignalisation,

— un compteur par dix 25 à sorties parallèles cadencé par le signal du rythme 1/T de succession des séquences qui lui est transmis par la première porte de type "et" 24 uniquement pendant la durée d'un message de télésignalisation et maintenu à zéro en dehors de cette durée par l'intermédiaire d'une bascule de type RS représentée par deux portes de type "non ou" 26, 27 et connectée par sa sortie Q à l'entrée de remise à zéro du compteur, par son entrée R à la sortie de la porte logique de type "et" 24 et par son entrée S à la sortie complémentée Q̄ du deuxième monostable 19,

— un multiplexeur 28 à dix entrées qui est adressé par le compteur 25, dont l'entrée correspondant à l'état 0 du compteur est mise au niveau logique 1, les 8 suivantes dans l'ordre d'adressage par le compteur à des niveaux logiques codant le numéro d'identification du répéteur concerné et la dernière connectée à l'une des sorties d'alarmes du circuit de gestion et de détection des alarmes 6' et

— une deuxième porte logique de type "et" 29 contrôlée par la sortie du multiplexeur à dix entrées 28 transmettant au premier monostable 14 le signal du rythme de succession des séquences qu'elle reçoit de la première porte logique de type "et" 24 pendant la durée de chaque message de télésignalisation, un circuit à retard formé d'une résistance 30 et d'une capacité 31 compensant le retard dû aux temps de basculement du compteur par dix 25 et du multiplexeur à dix entrées 28.

En l'absence d'alarme, le circuit de détection et de gestion des alarmes 6' maintient ses deux sorties au niveau logique 0 ce qui se traduit par un niveau logique 0 en sortie de la porte logique de type "ou" 20 qui laisse au repos le deuxième circuit monostable 19. Ce dernier bloque par la porte logique de type "et" 24 la transmission du signal du générateur du rythme 1/T de succession des séquences, maintient le compteur 25 à zéro et impose un niveau logique 0 en sortie de la porte logique de type "et" 29 qui laisse au repos le premier circuit monostable 14 de sorte que le multiplexeur 13 maintient l'entrée du modulateur optique en liaison avec la sortie du circuit de régénération du train numérique.

Dès qu'une alarme apparaît, l'une des sorties du circuit de détection et de gestion des alarmes 6' passe à un niveau logique 1 qui se propage à travers la porte logique de type "ou" 20 et déclenche par son front montant le deuxième circuit monostable 19 sur la durée d'un message de télésignalisation 80,72 μs. Ce dernier débloque d'une part la porte logique de type "et" 24 qui laisse passer le signal du générateur de rythme 1/T de succession de séquences à destination de la porte logique de type "et" 29 et d'autre part le compteur 25 qui commence à compter dès le deuxième front montant du signal de rythme 1/T et balaye les entrées du multiplexeur 28 au rythme de succession des intervalles de temps T. Les fronts montants du signal de rythme 1/T de succession des séquences qui franchissent la porte logique de type "et" 29 pendant la durée d'un message de télésignalisation déclenche à chaque fois le premier monostable 14 qui provoque par l'intermédiaire du multiplexeur 13 l'insertion d'une séquence à la place des données du train numérique. Le premier front montant du signal de rythme 1/T de succession des séquences franchit toujours la porte logique de type "et" 29 car l'entrée d'ordre 0 du multiplexeur 28 est à un niveau logique 1 imposé. Les huit fronts suivants franchissent ou ne franchissent pas la porte logique de type "et" 29 selon les niveaux logiques imposés aux entrées du multiplexeur se succédant dans les positions 1 à 8 de l'ordre de comptage du compteur 28 et codant le numéro d'identification du répéteur concerné. Le dernier et dixième front du signal de rythme 1/T de succession des séquences autorisé par le deuxième circuit monostable 19 franchit ou non la porte logique de type "et" 29 selon le niveau logique de l'entrée d'ordre 9 du multiplexeur 28 qui dépend du type d'alarme émis par le circuit de détection et de gestion des alarmes 6'. Le dixième front du signal de rythme 1/T de succession des séquences passé, le deuxième monostable 19 bascule dans sa position de repos provoquant la remise à zéro du compteur 25 et le blocage de la porte logique de type "et" 24 interdisant toute nouvelle insertion de séquence dans le train numérique.

Une nouvelle émission d'un message de télésignalisation nécessite le passage au niveau logique 0 des sorties du circuit de détection et de gestion des alarmes 6' ce qui peut s'obtenir éventuellement par une mise à zéro télécommandée de ce circuit.

On remarque que seuls un petit nombre d'éléments: ceux du générateur de motif (deux diviseurs par des bascules de type JK et une porte logique de type "non ou"), l'aiguillage réalisant l'insertion des séquences dans le train numérique à la place des données et éventuellement les premiers étages du générateur du rythme des séquences sont à réaliser en une technologie très rapide type ECL compatible avec le débit à 344 Mbits/s mais forte consommatrice d'énergie tandis que les autres éléments constituant la majorité du circuit fonctionnent à un débit très réduit de l'ordre 2,8 Mbits/s et ressortent d'une technologie rapide type $I^2 L$ ou Schottky beaucoup plus économe en énergie.

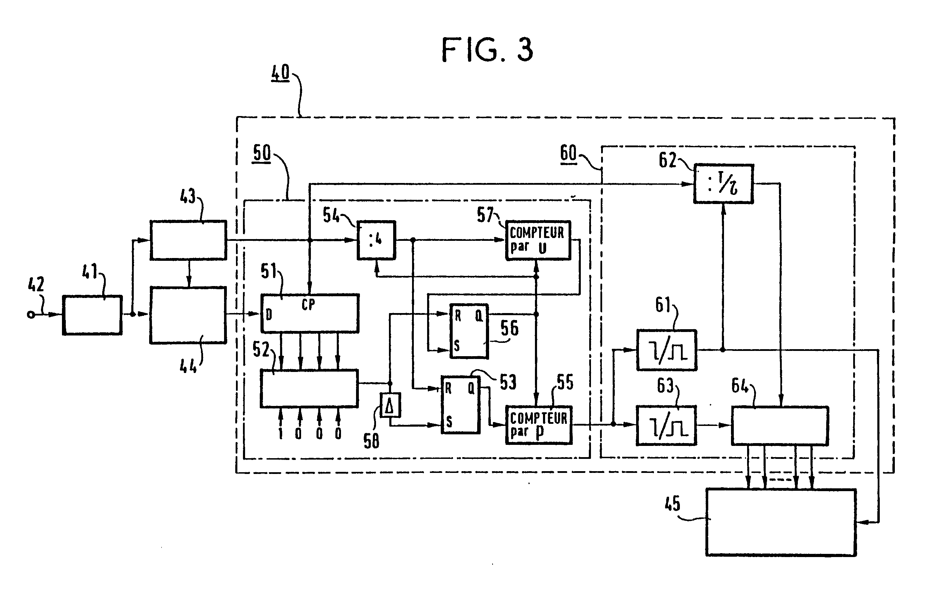

La figure 3 représente un exemple de réalisation d'un circuit de réception de télésignalisation 40, dans son environnement, intercalé à l'intérieur d'un équipement entre d'une part la tête de la voie de réception formée d'un démodulateur opto-électronique 41 sur lequel aboutit une fibre optique 42 acheminant le train numérique incident et de circuits électroniques de remise en forme du signal constitués principalement d'un circuit de récupération de cadence bit 43 et d'un circuit de régénération 44, et d'autre part un circuit d'exploitation de la signalisation 45 qui ne seront pas détaillés car ils sortent du cadre de la présente invention.

Le circuit de réception de télésignalisation 40 est formé d'un circuit de reconnaissance 50 de p motifs parmi q.u, q=4, éléments binaires successifs du train numérique acheminé par la liaison suivi d'un circuit d'échantillonnage et de mémorisation 60 fonctionnant au rythme 1/T de succession des séquences dans un message de télésignalisation.

Le circuit de reconnaissance 50 de p motifs parmi 4.u éléments binaires du train numérique comporte:

— un registre à décalage 51 à quatre étages, entrée série et sortie parallèle qui reçoit sur son entrée "données" le train numérique remis en forme provenant du circuit de régénération 44 et sur son entrée d'horloge le rythme bit formé par le circuit de récupération de rythme bit 43,

— un comparateur 52 de deux nombres binaires de 4 chiffres ayant une entrée câblée aux niveaux logiques 1000 l'autre connectée à la sortie parallèle du registre à décalage 51,

— un détecteur de coïncidence formé d'une bascule RS 53 connectée par son entrée S à la sortie du comparateur 52 au moyen d'un circuit introduisant un léger retard 58,

— un générateur de cadence de motifs qui est formé d'un diviseur par quatre 54 opérant sur le rythme bit fourni par le circuit de récupération de rythme bit 43 et qui réinitialise le détecteur de coïncidence en appliquant un niveau logique 1 à son entrée R à la cadence de succession des motifs,

— un compteur par p 55 dont l'entrée de comptage sensible aux fronts montants est connectée à la sortie Q de la bascule RS 53 formant le détecteur de coïncidence et qui assure le comptage des motifs reconnus,

— un circuit de déclenchement qui est formé d'une bascule RS 56 connectée par sa sortie Q aux entrées de remise à zéro du diviseur par quatre 54 et du compteur par p 55 et par son entrée R à la sortie du comparateur 52 et qui débloque ou maintient débloqué le diviseur par quatre 54 et le compteur par p 55 à chaque réponse positive du comparateur,

— et un compteur par u 57 (u > p) dont l'entrée de comtage sensible aux fronts montants est connectée en sortie du diviseur par quatre 54 formant le générateur de cadence de motifs et celle de remise à zéro à la sortie Q de la bascule RS 56 formant le circuit de déclenchement, et qui assure la réinitialisation du circuit de reconnaissance 50 en rebloquant son circuit de déclenchement au bout d'une durée correspondant à 4.u éléments binaires successifs du train numérique reçu.

Chaque fois qu'un motif du type 1000 apparaît dans le train numérique reçu, le comparateur 52 le détecte et délivre en sortie une impulsion positive qui provoque d'abord le passage ou le maintien au niveau logique 0 de la sortie Q de la bascule RS 56 formant le circuit de déclenchement ce qui débloque le cas échéant le diviseur par quatre 54 ainsi que les compteurs par p et u 55, 57, puis au bout d'un court instant le passage au niveau logique 1 de la bascule RS 53 formant le détecteur de coïncidence ce qui entraîne l'incrémentation du compteur par p 55. Au bout d'un intervalle de temps correspondant à un demi-motif, la sortie du diviseur par quatre 54 passe au niveau logique 1 provoquant la réinitialisation et le blocage du détecteur de coïncidence dont la sortie Q passe à zéro ainsi que l'incrémentation du compteur par u 57. Au bout d'un intervalle de temps correspondant à la durée d'un motif la sortie du diviseur par quatre repasse au niveau logique 0 autorisant le déblocage du détecteur de coïncidence pour la détection et le comptage d'un nouveau motif. A la uième période du signal délivré par le diviseur par quatre 54, le compteur par u 57 émet en sortie un niveau logique 1 qui arrête le processus en provoquant par l'intermédiaire du circuit de déclenchement la remise à zéro du diviseur par quatre 54 et des compteurs par p et u 55, 57. Entre temps, la sortie du compteur par p 55 est passée au niveau logique 1 si p motifs ou plus ont été reconnus.

Le compteur par p 55 est par exemple un compteur par huit et le compteur par u 57 un compteur par neuf.

Le circuit d'échantillonnage et de mémorisation 60 qui suit le circuit de reconnaissance 50 comporte:

— un premier circuit monostable 61 déclenchable par un front descendant sur une durée légèrement supérieure à cell D d'un message de télésignalisation (85 µs dans l'exemple décrit) et commandé par la sortie de comptage du compteur par p 55,

— un générateur de rythme 1/T de succession des séquences formé d'un diviseur 62 de rapport T/τ (3.2$^{10}$ dans l'exemple décrit) opérant sur le signal d'horloge délivré par le circuit de récupération de cadence bit 43 et maintenu à zéro en l'absence de déclenchement du premier monostable 61,

— un deuxième circuit monostable 63 déclenchable par un front descendant sur une durée légèrement supérieure à un demi-intervalle de temps T séparant deux séquences, augmenté de la durée d'une séquence (5 µs dans l'exemple décrit), et commandé par la sortie de comptage du compteur par p 55,

— un registre à décalage 64 à dix étages, entrée série et sorties parallèles qui reçoit sur son entrée donnée le signal du deuxième circuit monostable 63 et sur son entrée d'horloge le signal délivré par le générateur de rythme 1/T de succession des séquences formé par le diviseur 62.

En réponse à la première séquence d'un message de télésignalisation, le compteur par p 55 du circuit de reconnaissance 50 délivre en sortie un signal binaire pouvant présenter plusieurs paires de transitions positive et négative qui correspondent respectivement à des franchissements de seuils p et u par les compteurs 55, 57 et qui sont en nombre au plus égal à celui des groupes de u motifs contenus dans une séquence. La première transition négative est interprétée comme la réception de la séquence préfixe d'un message. Elle provoque le déclenchement du premier circuit monostable 61 qui débloque le diviseur 62 de rapport T/τ engendrant le rythme 1/T de succession de séquences et sa mémorisation par le deuxième circuit monostable 63. Un demi-intervalle de temps T/2 après l'apparition de cette première transition négative, il se produit une transition positive dans le signal du diviseur 62 qui provoque le premier décalage du registre 64 avec inscription d'un niveau logique 1 dans le premier étage de ce registre. Avant la fin du premier intervalle de temps T, le premier circuit monostable 63 revient au repos prêt à enregistrer la présence ou l'absence d'une séquence au début du prochain intervalle de temps T, présence ou absence qui est inscrite dans le registre à décalage 64 au milieu dudit intervalle et ainsi de suite jusqu'à ce que le premier circuit monostable 61 revienne au repos après inscription complète du registre à décalage 64.

Le circuit d'exploitation de la signalisation 45 reçoit le nombre binaire codant l'information de télésignalisation de la sortie parallèle du registre à décalage 64 et une autorisation de prise en compte de ce nombre de la sortie du premier circuit monostable 61 qui lui signale lorsqu'il retourne au repos.

On retrouve dans ce circuit de réception un certain nombre de circuits fonctionnant à grand débit nécessitant une technologie très rapide grande consommatrice d'énergie. Mais cela est sans importance car l'exploitation de la télésignalisation ne se fait sur une liaison numérique que dans un petit nombre d'équipements en général non téléalimentés.

## Revendications

1. Procédé de télésignalisation pour une liaison de transmission numérique consistant à transmettre la signalisation à l'aide d'un message numérique de même débit que le train numérique de données acheminé par la liaison auquel il est momentanément substitué, caractérisé en ce que ledit message numérique est créé dans l'équipement de ladite liaison à l'origine de la signalisation à transmettre et formé au plus de n séquences identiques de N éléments binaires, n et N étant des entiers supérieurs à un, la première séquence étant toujours présente et les autres traduisant par leur présence ou leur absence au cours de $n-1$ intervalles de temps ultérieurs les valeurs 0 ou 1 des $n-1$ chiffres d'un nombre binaire codant une information de télésignalisation, la période de répétition desdits intervalles de temps étant égale à T, et la durée desdites séquences étant elle-même inférieure à T.

2. Procédé selon la revendication 1, caractérisé en ce que les séquences sont constituées d'une configuration périodique d'éléments binaires obtenue par répétition d'un motif.

3. Procédé selon la revendication 2, caractérisé en ce que ledit motif est formé des quatre éléments binaires successifs 1000.

4. Procédé selon la revendication 2, caractérisé en ce que chaque séquence est reconnue par identification dans le train numérique acheminé par la liaison de p motifs parmi une suite de q.u éléments binaires successifs, p et u étant des entiers plus grands que un et q le nombre d'éléments binaires d'un motif.

5. Dispositif de mise en oeuvre du procédé selon la revendication 1 sur une liaison numérique ayant au moins un équipement pourvu d'un circuit de détection et de gestion des alarmes (6') et d'un circuit (3) de récupération de cadence bit du train numérique, caractérisé en ce qu'il comporte au moins un circuit d'émission de message de télésignalisation (7) placé dans ledit équipement et comportant:

— des moyens générateurs de motifs (10, 11, 12) engendrant de manière répétitive un motif obtenu par une combinaison logique des premières sous-harmoniques du signal d'horloge délivré par le circuit de récupération de rythme bit (3),

— des moyens d'aiguillage (13) permettant d'insérer momentanément le signal élaboré par les moyens générateurs de motifs à la place du train numérique de données acheminé par la liaison,

— un premier circuit monostable (14) ayant un temps de déclenchement t correspondant à la durée d'une séquence et actionnant les moyens d'aiguillage (13) de manière à insérer le signal élaboré par les moyens générateurs de motifs à la place du train numérique de données lorsqu'il est déclenché,

— un deuxième circuit monostable (19) qui a un temps de déclenchement correspondant à la durée D d'un message de télésignalisation et qui est actionné par le circuit de détection et de gestion des alarmes (6'),

— des moyens générateurs de rythme de succession des séquences (18) contrôlés par le deuxième circuit monostable (19) et opérant à partir du signal d'horloge délivré par le circuit de récupération de cadence de bit (3),

— un compteur à sortie parallèle (25) cadencé par les moyens générateurs de rythme de succession des séquences (18) et maintenu à zéro par le deuxième circuit monostable (19) en dehors des périodes déclenchement de ce dernier,

— un multiplexeur (28) adressé par le compteur (25) avec son entrée sélectionnée à l'état 0 du compteur (25) portée au niveau logique 1 et ses autres entrées portées à des niveaux logiques codant une information de télésignalisation et

— une porte logique (29) commandée par le multiplexeur (28) contrôlant l'application à l'entrée du premier circuit monostable (14) du signal élaboré par les moyens générateurs de rythme de succession des séquences (18).

6. Dispositif selon la revendication 5, caractérisé en ce que les moyens générateurs de motifs comportent une porte logique de type "non ou" (12) à deux entrées et des diverseurs par deux (10, 11) fournissant à ladite porte logique des signaux au quart et à la moitié de la fréquence du signal d'horloge délivré par le circuit de récupération de rythme bit (3).

7. Dispositif selon la revendication 5, pour liaison numérique ayant au moins un équipement pourvu d'un circuit d'exploitation de la signalisation (45) et d'un circuit (43) de récupération de cadence bit du train numérique caractérisé en ce qu'il comporte au moins un circuit de réception de message de télésignalisation placé dans ledit équipement et formé d'un circuit de reconnaissance (50) de p motifs parmi q.u éléments binaires successifs du train numérique acheminé par la liaison suivi d'un circuit d'échantillonnage et de mémorisation (60) au rythme 1/T de succession des séquences.

8. Dispositif selon la revendication 7, caractérisé en ce que le circuit de reconnaissance (50) de p motifs parmi q.u éléments binaires successifs comporte:

— un registre à décalage (51) à entrée série et sortie parallèle qui reçoit le train numérique acheminé par la liaison, qui est cadencé par le signal d'horloge élaboré par le circuit de récupération de cadence bit (43) et délivre sur sa sortie parallèle des mots binaires de la longueur d'un motif,

— un comparateur (52) de deux nombres binaires de la longueur d'un motif, l'un identique à un motif et câble, l'autre délivré par la sortie parallèle du registre à décalage (51),

— un générateur de cadence de motifs formé d'un diviseur (54) opérant sur le signal d'horloge élaboré par le circuit récupération de cadence bit (43),

— un compteur par u (57) opérant sur le signal de sortie du générateur de cadence de motifs et repérant des suites de q.u éléments binaires successifs dans le train numérique,

— un détecteur de coïncidence (53, 58) connecté à la sortie du comparateur (52) et réinitialisé à la cadence de succession des motifs par le générateur de cadence de motifs (54),

— un compteur par p (55) opérant sur le signal de sortie du détecteur de coïncidence (53) et

— un circuit de déclenchement (56) qui est activé par le comparateur (52) et mis au repos par le compteur par u (57) et qui, lorsqu'il est au repos, bloque le générateur de cadence de motif (54) et maintient à zéro les diviseurs par p et u (55, 57).

**Patentansprüche**

1. Verfahren zur Fernsignalgebung bei einer digitalen Übertragungsstrecke mit Hilfe einer digitalen Nachricht gleicher Bitrate wie derjenigen des von der Strecke beförderten digitalen Datenstroms, an dessen Stelle sie vorübergehend tritt, dadurch gekennzeichnet, daß die digitale Nachricht in der Einrichtung erzeugt wird, von der die zu übertragende Signalgebung ausgeht, und aus höchstens n identischen Folgen von N Binärelementen besteht, wobei n und N ganze Zahlen größer als Eins sind und die erste Folge stets vorhanden ist, während die anderen Folgen durch ihr Vorhandensein oder ihr Fehlen während n−1 späteren Zeitintervallen die Werte 0 oder 1 der n−1 Ziffern einer eine Fernsignalinformation kodierenden Binärzahl darstellen, wobei die Wiederholperiode der Zeitintervalle gleich T ist und die Dauer der Folgen kleiner als T ist.

2. Verfahren nach Anspruch 1, dadurch gekennzeichnet, daß die Folgen aus einer periodischen Konfiguration binärer Elemente aufgebaut sind, die durch Wiederholung eines Musters gewonnnen wird.

3. Verfahren nach Anspruch 2, dadurch gekennzeichnet, daß das Muster aus vier aufeinanderfolgenden Binärelementen 1000 besteht.

4. Verfahren nach Anspruch 2, dadurch gekennzeichnet, daß jede Folge in dem von der Strecke beförderten digitalen Datenstrom durch Identifizierung von p Mustern in einer Folge von q.u aufeinanderfolgenden Binärelementen erkannt wird, wobei p und u ganze Zahlen größer als Eins sind und q die Anzahl der Binärelemente eines Musters bedeutet.

5. Vorrichtung zur Durchführung des Verfahrens nach Anspruch 1 auf einer digitalen Datenstrecke, die mindestens eine Einrichtung mit einer Alarmerfassungs- und -verarbeitungsschaltung (6') und einer Schaltung (3) zur Wiedergewinnung des Bittaktes des Datenstroms aufweist, dadurch gekennzeichnet, daß die Vorrichtung mindestens eine Sendeschaltung (7) für die Fernsignalnachricht besitzt, die in der Einrichtung untergebracht ist und folgende Komponenten aufweist:

—Mustererzeugungsmittel (10, 11, 12), die wiederholend ein durch eine logische Kombination der ersten Unterharmonischen des von der Bittaktwiedergewinnungsschaltung (3) gelieferten Taktsignals gewonnenes Muster erzeugen,

— Weichenmittel (13), mit denen vorübergehend das von den Mustererzeugungsmitteln gebildete Signal an die Stelle des von der Strecke beförderten digitalen Datenstroms eingefügt wird,

— eine erste monostabile Kippschaltung (14), die eine Auslösezeit t entsprechend der Dauer einer Folge besitzt und bei ihrer Auslösung die Weichenmittel (13) so betätigt, daß das von den Mustererzeugungsmitteln gebildete Signal an die Stelle des digitalen Datenstroms eingefügt wird,

— eine zweite monostabile Kippschaltung (19), die eine Auslösezeit entsprechend der Dauer D einer Fernsignalnachricht besitzt und durch die Alarmerfassungs- und -verarbeitungsschaltung (6') betätigt wird,

— Taktgeneratormittel (18) für den Abfolgetakt der Bitfolgen, wobei diese Mittel von der zweiten monostabilen Kippschaltung (19) gesteuert werden und aufgrund des Taktsignals arbeiten das von der Bittaktwiedergewinnungsschaltung (3) geliefert wird,

— einen Zähler (25) mit Parallelausgang, der von den Taktgeneratormitteln (18) für den Abfolgetakt der Bitfolgen getaktet und von der zweiten monostabilen Kippschaltung (19) außerhalb der Auslöseperioden derselben auf Null gehalten wird,

— einen Multiplexer (28), der vom Zähler adressiert wird und dessen dem Stand 0 des Zählers (25) zugewiesener Eingang auf Logikpegel 1 eingestellt ist, während seine anderen Eingänge auf logische Pegel eingestellt sind, welche eine Fernsignalinformation kodieren, und

— ein logisches Tor (29), das vom Multiplexer (28) angesteuert wird und das Anlegen des von den Taktgeneratormitteln (18) für die Abfolge der Bitfolgen gestalteten Signals an den Eingang der ersten monostabilen Kippschaltung (14) steuern.

6. Vorrichtung nach Anspruch 5, dadurch gekennzeichnet, daß die Mustererzeugungsmittel ein logisches Tor vom Typ "NICHT ODER" (12) mit zwei Eingängen sowie Halbierteiler (10, 11) aufweisen, welche an das Tor Signale mit einer Frequenz von einem Viertel und der Hälfte der Frequenz des von der Bittaktwiedergewinnungsschaltung gelieferten Taktsignals liefern.

7. Vorrichtung nach Anspruch 5 zur Verwendung in einer Digitalstrecke mit mindestens einer Einrichtung, welche mit einer Signalverwertungsschaltung (45) und einer Bittaktwiedergewinnungsschaltung (43) für den Digitalstrom ausgestattet ist, dadurch gekennzeichnet, daß die Vorrichtung mindestens eine Schaltung zum Empfang der Fernsignal-Nachricht aufweist, die in der genannten Einrichtung untergebracht ist und aus einer Schaltung (50) zur Erkennung von p Mustern unter q.u aufeinanderfolgenden Binärelementen des von der Strecke beförderten digitalen Datenstroms besteht, an die sich eine im Abfolgetakt 1/T der Bitfolgen arbeitende Abtast- und Speicherschaltung (60) anschließt.

8. Vorrichtung nach Anspruch 7, dadurch gekennzeichnet, daß die Schaltung (50) zur Erkennung von p Mustern unter q.u aufeinanderfolgenden Binärelementen folgende Komponenten aufweist:

— ein Schieberegister (51) mit Serieneingang und Parallelausgang, das den von der Stecke beförderten Digitalstrom empfängt, welcher durch das von der Bittaktwiedergewinnungsschaltung (43) erarbeitete Taktsignal getaktet wird, und das an seinem Parallelausgang Binärworte von der Länge eines Musters liefert,

— einen Komparator (52) für zwei Binärzahlen von der Länge eines Musters, von denen eine Zahl mit einem Muster identisch ist und fest verdrahtet ist, während die andere Zahl vom Parallelausgang des Schieberegisters (51) geliefert wird,

— einen Mustertaktgenerator (54), der aus einem Teiler besteht, welcher aufgrund des von der Bittaktwiedergewinnungsschaltung (43) erarbeiteten Taktsignals arbeitet,

— ein Zähler (57) modulo u, der das Ausgangssignal des Mustertaktgenerators empfängt und Folgen von q.u aufeinanderfolgenden Binärelementen im Digitalstrom erkennt,

— einen Koinzidenzdetektor (53, 58), der an den Ausgang des Komparators (52) geschaltet ist und vom Mustertaktgenerator (54) im Abfolgetakt der Muster rückgestellt wird,

— einem Zähler (55) modulo p, der das Ausgangssignal des Koinzidenzdetektors (53) empfängt, und

— eine Auslöseschaltung (56), die vom Komparator (52) aktiviert und durch den modulo u-Zähler (57) in Ruhestellung gebracht wird, und die, wenn sie in Ruhestellung ist, den Mustertaktgenerator (54) blockiert und die Teiler mit Divisor p und u (55, 57) auf Null hält.

**Claims**

1. A remote signalling method for a digital transmission link, the method consisting in transmitting the signalling by means of a digital message at the same bit rate as the digital data stream conveyed by the link, which message momentarily replaces said data stream, characterized in that said digital message created in that equipment of said link which has been the source of the signalling to be transmitted and which is constituted by not more than n identical sequences of N binary elements where n and N are integers greater than 1, the first sequence being always present, whereas the n−1 other sequences, by virtue of their presence or absence during the following n−1 time interval express the binary values 0 or 1 of the n−1 digits of a binary number encoding a remote signalling information, and the repetition period of said time intervals being equal to T, whereas the duration of said sequences is smaller than T.

2. A method according to claim 1, characterized in that the sequences are constituted by a periodic configuration of binary elements obtained by repeating a pattern.

3. A method according to claim 2, characterized in that said pattern is constituted of four successive binary elements 1000.

4. A method according to claim 2, characterized in that each sequence is recognized by identifying p patterns from a stream of q.u successive binary elements in the digital stream conveyed by the link, where p and u are integers greater than 1, and q is the number of binary elements in a pattern.

5. An apparatus for performing the method according to claim 1 on a digital link including at least one equipment provided with a circuit for detecting and handling alarms (6') and a circuit (3) for recovering the bit rate from the digital data stream, characterized in that the apparatus includes at least one remote signalling transmission circuit (7) located in said equipment, said circuit comprising:

— pattern generator means (10, 11, 12) for repetitively generating a pattern obtained by logically combining first subharmonics of the clock signal delivered by the bit recovery circuit (3),

— switching means (13) enabling the signal generated by the pattern generator means to be momentarily inserted in place of the digital data stream conveyed by the link,

— a first monostable circuit (14) having a trigger time lag t corresponding to the duration of a sequence, and adapted to control the switching means (13) to insert a signal generated by the pattern generator means in place of the digital stream whenever the circuit is triggered,

— a second monostable circuit (19) having a trigger time lag corresponding to the duration D of a remote signalling message and being triggered by the circuit (6') for detecting and handling alarms,

— means (18) for generating a sequence succession rate under the control of the second monostable circuit (19) and driven by the clock signal delivered by the bit rate recovery circuit (3),

— a parallel output counter (25) driven by the sequence succession rate generating means (18) and held in a zero state by the second monostable circuit (19) in times out of the trigger periods,

— a multiplexer (28) addressed by the counter (25), with its input selected by the zero state of the counter (25) being set to logic level 1, and the other inputs of the multiplexer being set to logic levels which encode a remote signalling information, and

— a logic gate (29) driven by the multiplexer (28) and controlling the application of the signal generated by the sequence succession rate generating means (18) to the input of the first monostable circuit (14).

6. An apparatus according to claim 5, characterized in that the pattern generating means comprise a two-input logic NOR gate (12) and divide-by-two circuits (11) providing said logic gate with signals at one-fourth and at one-half of the frequency of the clock signal delivered by said bit rate recovery circuit (3).

7. An apparatus according to claim 5 for use on a digital link including at least one equipment provided with a circuit (45) for exploiting the signalling and with a circuit (43) for recovering the bit rate from the digital stream, characterized in that the apparatus includes at least one circuit for receiving remote signalling messages, which is located in said equipment and is constituted by a circuit (50) for recognizing patterns from q.u successive binary elements in the digital stream conveyed by the link, that circuit being followed by a sampling and storing circuit (60) operating at the sequence succession rate (1/T).

8. An apparatus according to claim 7, characterized in that said circuit (50) for recognizing p patterns from q.u successive bits comprises:

— a serial-input/parallel output shift register (51) adapted to receive the digital stream conveyed by the link and clocked by the clock signal generated by the bit rate recovery circuit (43), and delivering at its parallel output binary words having the length of a pattern,

— a comparator (52) for comparing two binary numbers having the length of a pattern, one of them being identical to a pattern and being hardwired, and the other being delivered by the parallel output from the shift register (51),

— a pattern rate generator (54) constituted by a divider operating in accordance with a clock signal generated by the bit rate recovery circuit (43),

— a modulo-u counter (57) operating in accordance with the output signal of the pattern rate generator and localizing strings of q.u successive binary elements in the digital stream,

— a coincidence detector (53, 58) connected to the output of the comparator (52) and re-initialized at the pattern succession rate by the pattern rate generator (54),

— a modulo-p counter (55) operating in accordance with the output signal from the coincidence detector (53), and

— a trigger circuit (56) which is activated by the comparator (52) and put at rest by the modulo-u counter (57) and which, while at rest, inhibits the pattern rate generator (54) and maintains the modulo-p and u counters (55, 57) in their zero states.

# FIG. 1

# FIG. 2

# FIG. 3

EP 0 184 109 B1